# EUROPEAN PATENT APPLICATION

(11) **EP 4 428 689 A1**
(43) Date of publication of application: **11.09.2024**
(21) Application number: 23208691.8
(22) Date of filing: 09.11.2023
(51) Int. Cl.: G06F 9/50

(54) **METHOD FOR AUTOMATING CLOUD BUILDING**

(30) Priority: 09.03.2023 KR 20230031260; 31.05.2023 KR 20230070044
(71) Applicant: Samsung SDS Co., Ltd., Seoul 05510 (KR)
(72) Inventor: Kim, Misook, 05510 Seoul (KR); Park, Jungchul, 05510 Seoul (KR); Kim, Hyengun, 05510 Seoul (KR); Yang, Jongsung, 05510 Seoul (KR); Yang, Sooyeon, 05510 Seoul (KR)
(74) Representative: Grünecker Patent- und Rechtsanwälte PartG mbB

(57) **Abstract**

A method for automating cloud building according to an example embodiment of the present disclosure, is performed in a computing device including: a processor; and a storage medium in which one or more programs specified to be executed by the processor are recorded, the method including: receiving cloud configuration information; determining an operation type based on the received cloud configuration information; extracting one or more processes mapped to the operation type from a plurality of processes in a cloud building process, and generating a pipeline by combining the one or more extracted processes; and executing the pipeline based on the cloud configuration information.

## Description

### CROSS-REFERENCE TO RELATED APPLICATION(S)

This application claims benefit of priority to Korean Patent Application Nos. 10-2023-0031260 and 10-2023-0070044 filed on March 9, 2023, and May 31, 2023, in the Korean Intellectual Property Office, the disclosures of which are incorporated herein by reference in their entirety.

### BACKGROUND

### 1. FIELD

The present disclosure relates to a method for automating cloud building.

### 2. DESCRIPTION OF RELATED ART

A cloud is a service specified to store software and data on a central computer connected to the Internet, and to access a network so that data can be used anytime, anywhere.

When building existing infrastructure into a cloud or transforming an existing cloud into another cloud, most conventional cloud building services have been performed manually. Accordingly, there may be a problem that the quality of operations may not be uniform, according to different technical skills and levels of proficiency of respective workers.

Furthermore, when customer requirements are changed or errors are discovered during operation processing, some existing operations need to be deleted and reworked, which may lead to increasing the overall risk of cloud building projects.

Furthermore, types of cloud transformation or building operations include a Rehosting transformation, a Replatforming transformation, a Refactoring transformation, a Repurchasing transformation, Retaining, Retiring, and newly building, and even in the case of performing different operations, there are numerous processes repeatedly executed for each type, and when a pipeline is newly specified every time, this may be inefficient.

### Prior Art Document

### Patent Document

(Patent Document 1) Japanese Unexamined Patent Application Publication No. 2015-194851 (November 5, 2015)

### SUMMARY

An aspect of the present disclosure is to provide a method for automating cloud building which may improve the overall quality of operations by automating cloud building operations, may reduce lead time and save manpower and cost inputs, and may minimize a risk of operation correction or change.

According to an aspect of the present disclosure, provided is a method for automating cloud building, performed in a computing device including: a processor; and a storage medium in which one or more programs specified to be executed by the processor are recorded, the method including: receiving cloud configuration information; determining an operation type based on the received cloud configuration information; extracting one or more processes mapped to the operation type from a plurality of processes in a cloud building process, and generating a pipeline by combining the one or more extracted processes; and executing the pipeline based on the cloud configuration information.

According to an aspect of the present disclosure, provided is a computer-readable storage medium in which a program for executing the method on a computer is recorded.

An aspect of the present disclosure is to provide a method for automating cloud building which may improve the overall quality of operations by automating cloud building operations, may reduce lead time and save manpower and cost inputs, and may minimize a risk of operation correction or change.

Modularized codes according to the type of operations may be collected and combined to generate a suitable pipeline, thereby allowing for easy reuse of code and quickly and efficiently treating cloud building and transformation operations.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a block diagram schematically illustrating an entire system including a cloud building automation device according to an example embodiment of the present disclosure;
FIG. 2 is an exemplary view illustrating a cloud building process performed in a method for automating cloud building according to an example embodiment of the present disclosure;
FIG. 3 is an exemplary block diagram illustrating a code stored in a storage unit of a cloud building automation device according to an example embodiment of the present disclosure;
FIG. 4A is a view illustrating a method of generating a pipeline for a cloud transformation operation executed in a method for automating cloud building according to an example embodiment of the present disclosure;
FIG. 4B is an exemplary flowchart of a pipeline for a cloud transformation operation executed in a method for automating cloud building according to an example embodiment of the present disclosure;
FIG. 5A is a view illustrating a method of generating a pipeline for a cloud transformation operation executed in a method for automating cloud building according to an example embodiment of the present disclosure;
FIG. 5B is an exemplary flowchart of a pipeline for a cloud transformation operation executed in a method for automating cloud building according to an example embodiment of the present disclosure;
FIG. 6A is a view illustrating a method of generating a pipeline for a new cloud building operation executed in a method for automating cloud building according to an example embodiment of the present disclosure;
FIG. 6B is an exemplary flowchart of a pipeline for a new cloud building operation executed in a method for automating cloud building according to an example embodiment of the present disclosure;
FIG. 7 is a flowchart of a method for automating cloud building according to an example embodiment of the present disclosure; and
FIG. 8 is a block diagram of a computing device specified to entirely or partially implement a cloud building automation device according to an example embodiment of the present disclosure.

### DETAILED DESCRIPTION

Hereinafter, a specific example embodiment of the present disclosure will be described with reference to the drawings. The following detailed description is provided to help a comprehensive understanding of methods, devices, and/or systems described herein. However, this is only an example, and the present disclosure is not limited thereto.

In describing example embodiments of the present disclosure in detail, when it is determined that a detailed description of related known functions or configurations may unnecessarily obscure the gist of the present disclosure, the detailed description thereof will be omitted. Furthermore, the terms described below are defined in consideration of the functions in the present disclosure, which may vary depending on the intention or practice of a user or an operator. Therefore, the definition should be based on the content throughout the specification. The terms used in the detailed description are only for describing example embodiments of the present disclosure and should never be limited. Unless clearly used otherwise, singular forms of expression include plural forms of meaning. In this description, this specification, the singular also includes the plural unless specifically stated otherwise in the phrase. It will be further understood that the terms "comprises," "comprising," "includes" and/or "including", when used herein, specify the presence of stated features, integers, steps, operations, elements, components, and/or a portion thereof or combinations thereof, but do not preclude the presence or addition of one or more other features, integers, steps, operations, elements, components, and/or groups thereof.

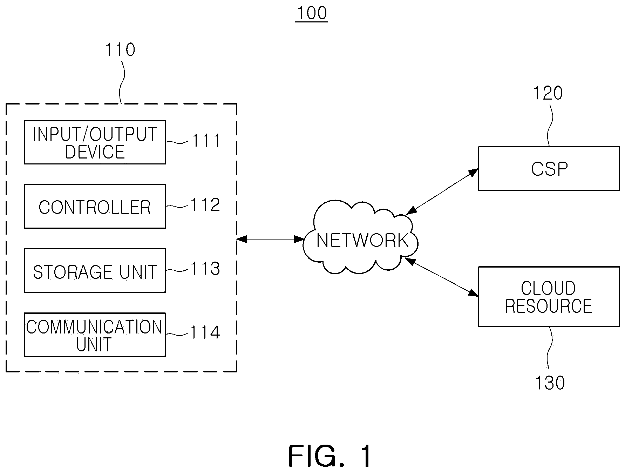

FIG. 1 is a view illustrating an entire system 100 including a cloud building automation device 110, a cloud service provider (CSP) 120, and a cloud resource 130 according to an example embodiment of the present disclosure.

The cloud building automation device 110 may process a plurality of processes included in a cloud building process. A plurality of processes for building a cloud include one or more sub-processes, and the sub-process may consist of one or more operations.

The cloud building automation device 110 of the present disclosure may determine an operation type of the cloud building process based on the received cloud configuration information, and may generate and execute a pipeline of a cloud building operation corresponding to the determined operation type.

The cloud building automation device 110 may automate the cloud building operation by processing all or a portion of the cloud building process included in the pipeline.

The CSP 120 is a cloud service provider, and the cloud building automation device 110 may transmit and receive data through a network with the CSP 120. For example, the cloud building automation device 110 may request an API to the CSP 120.

The cloud resource 130 may include a cloud resource generated in a CSP environment. The cloud building automation device 110 may transmit and receive data to and from the cloud resource 130 through the network. The cloud resource 130 may include, for example, at least one of one or more virtual machines VM, bare metal BM, and database DB.

Referring to FIG. 1, the cloud building automation device 110 may include an input/output device 111, a controller 112, a storage unit 113, and a communication unit 114.

The input/output device 111 may receive cloud configuration information on a cloud building process. For example, the input/output device 111 may receive the cloud configuration information from a user terminal or another external device.

Furthermore, the input/output device 111 may output a processing result of the cloud building process. The input/output device 111 may output the processing result in units of processes included in the cloud building process, units of sub-processes included in each process, or units of operations included in the sub-process.

The processing result output from the input/output device 111 may be transmitted to a user terminal or another external device in the form of a notification message. For example, the processing result may be delivered via email, a messenger app, or an output channel of an external system.

The controller 112 of the cloud building automation device 110 may process all or a portion of the cloud building process based on the received cloud configuration information.

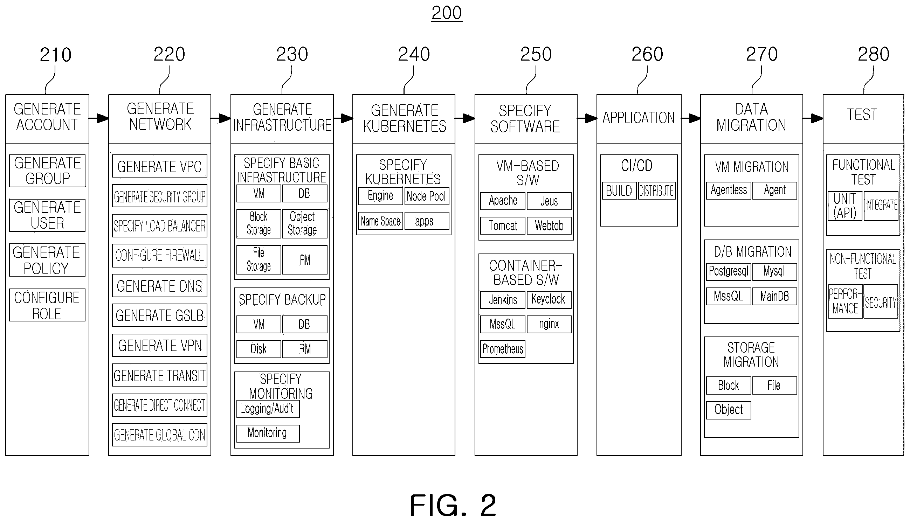

FIG. 2 is an exemplary view illustrating a cloud building process performed in a method for automating cloud building according to an example embodiment of the present disclosure.

According to an example illustrated in FIG. 2, the cloud building process may include an account process 210, a network process 220, an infrastructure process 230, a Kubernetes process 240, a software process 250, an application process 260, a data migration process 270, and a test process 280.

In the account process 210, group generation, user generation, policy generation, and role configuration may be performed to use a cloud service provided by the CSP 120. In the network process 220, network components may be generated and interworking between the components may be performed. In the infrastructure process 230, infrastructure resources such as VM, BM, storage, or databases may be generated, and configurations for backup and monitoring may be generated. In the Kubernetes process 240, a Kubernetes cluster may be generated when a container execution environment is required.

In the software process 250, software required for providing a cloud service may be installed or distributed. In the application process 260, an operation of building and storing or distributing a developed application in a registry may be performed.

In the data migration process 270, the VM, the BM, the database, and the storage may be migrated.

In the test process 280, a verification test of a cloud transformation or building process may be performed.

A plurality of processes may include one or more sub-processes, and the sub-process may consist of one or more operations.

For example, the account process 210 may include one or more sub-processes or one or operations for the group generation, the user generation, the policy generation, and the role configuration.

The controller 112 may determine an operation type of the cloud building process based on the received cloud configuration information. The operation type in the cloud building process may be determined based on, for example, whether the operation is either a cloud transformation operation or a new cloud building operation, or whether the operation corresponds to either an initial configuration operation or a configuration change operation of the cloud building process.

The controller 112 may determine first type information and second type information as the work type.

The controller 112 may determine the first type information as one the cloud transformation operation and the cloud new building operation. When a transformation operation from an existing cloud environment to a new cloud environment is requested based on the cloud configuration information, the first type information may be determined as a cloud transformation operation.

Furthermore, when the existing cloud environment does not exist based on the cloud configuration information, the first type information may be determined as a new cloud building operation.

The controller 112 may determine the second type information as one of the initial configuration operation and the configuration change operation. When the cloud configuration information includes information for requesting a new progress on the cloud building process, the second type information may be determined as the initial configuration operation.

Furthermore, when the cloud configuration information is changed configuration information for changing pre-stored configuration information, or includes additional operation requests for an ongoing process, the second type information can be determined as the configuration change operation.

The controller 112 may further determine third type information when the first type information is a cloud transformation operation. The third type information may be determined as one of a rehosting transformation operation, a replatforming transformation operation, and a refactoring transformation operation based on the cloud configuration information.

When the cloud configuration information requests a cloud transformation operation in which OS, data, and applications are lifted and moved without any change, the third type information may be determined as the rehosting transformation operation.

Furthermore, when the cloud configuration information requests a cloud transformation operation having some code modification involving therein, the third type information may be determined as the replatforming transformation operation.

Furthermore, when the cloud configuration information requests a cloud transformation operation having a manner of reconstructing an architecture optimized for the cloud environment, the third type information may be determined as the refactoring transformation operation.

A plurality of processes included in the cloud building process may be mapped to one or more operation types. For example, the account process 210 illustrated in FIG. 2 may be mapped to the cloud transformation operation and the cloud new building operation. As another example, data migration process 270 may be mapped to the cloud transformation operation.

The controller 112 may generate a pipeline by extracting one or more processes mapped to the operation type among the plurality of processes included in the cloud building process and combining the one or more extracted processes.

The controller 112 may extract and combine one or more processes related to the changed configuration information from the plurality of processes when the second type information is the configuration change operation.

The controller 112 may execute the pipeline based on the cloud configuration information. The controller 112 may execute all or a portion of the cloud building process included in the pipeline.

Meanwhile, the storage unit 113 of the cloud building automation device 110 may be a module for storing various programs for implementing functions performed by the controller 112 described above.

Furthermore, the received cloud configuration information and a code of the cloud building process may be stored in the storage unit 113.

The controller 112 may perform all or a portion of the cloud building process using at least a portion of the code stored in the storage unit 113 based on the input configuration information.

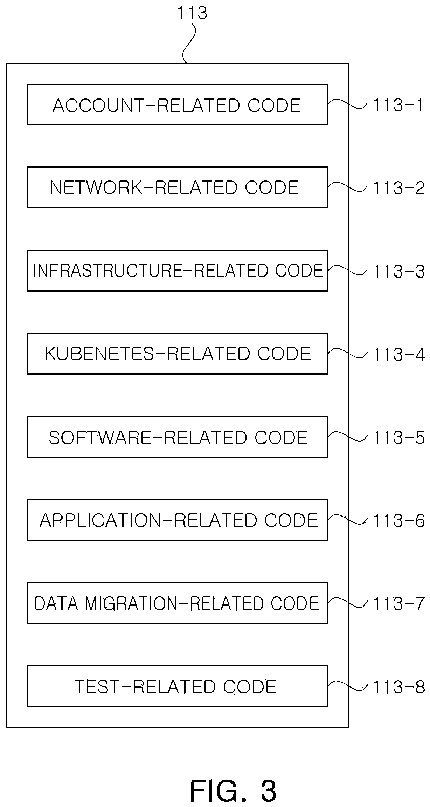

FIG. 3 is a view exemplarily illustrating a code stored in the storage unit 113 of the cloud building automation device according to an example embodiment of the present disclosure.

The storage unit 113 may store codes corresponding to each process of the cloud building process as illustrated in FIG. 2. For example, the storage unit 113 may store an account-related code 113-1, a network-related code 113-2, an infrastructure-related code 113-3, a Kubernetes-related code 113-4, a software-related code 113-5, an application-related code 113-6, a data migration-related code 113-7, and a test-related code 113-8.

The codes 113-1 to 113-8 stored in the storage unit 113 may correspond to a plurality of processes 210 to 280 included in the cloud building process, respectively. The controller 112 may collect codes corresponding to one or more processes extracted at the time of executing the pipeline.

The controller 112 may combine codes to correspond to a combined order of the one or more extracted processes in the pipeline.

Security information among the received cloud configuration information may be encrypted and stored in the storage unit 113. The security information may include, for example, at least one of personal information, a password, a key file, and a certificate file.

In an example embodiment of the present disclosure, the controller 112 may periodically confirms whether the cloud configuration information stored in the storage unit 113 is updated, and may perform all or a portion of the cloud building process when the configuration information is confirmed to be updated.

The communication unit 114 of the cloud building automation device 110 may transmit and receive various data to and from an external server or an external device including the CSP 120 and the cloud resource 130 under the control of the controller 112.

For example, the communication unit 114 may receive cloud configuration information input from a user terminal. Furthermore, the communication unit 114 may receive a test performance result of the cloud resource 130. Furthermore, the communication unit 114 may transmit a performance result of the cloud building process to an external device.

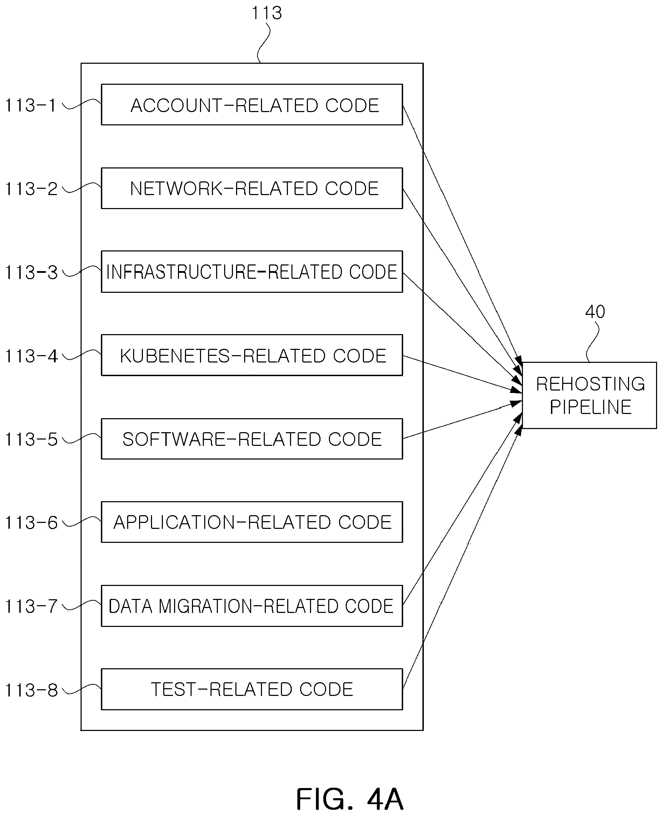

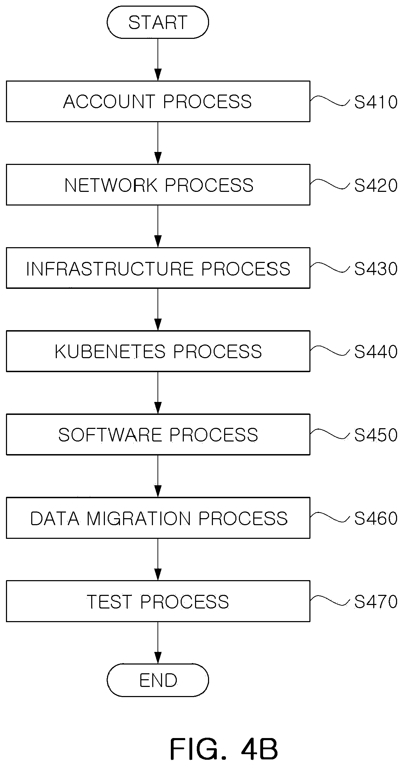

FIGS. 4A and 4B are views illustrating a case in which a rehosting transformation operation is performed in a method for automating cloud building according to an example embodiment of the present disclosure.

A controller 112 may determine an operation type based on the received cloud configuration information. When first type information is a cloud transformation operation, second type information is an initial configuration operation, and third type information is a rehosting transformation operation, the controller 112 may extract and combine an account process 210, a network process 220, an infrastructure process 230, a Kubernetes process 240, a software process 250, a data migration process 270 and a test process 280 sequentially.

However, when the received cloud configuration information does not include Kubernetes-related information, the Kubernetes process 240 may not be extracted.

When the first type information is a cloud transformation operation, the second type information is an initial configuration operation, and the third type information is a rehosting transformation operation, the controller 112 may collect an account-related code 113-1, a network-related code 113-2, an infrastructure-related code 113-3, a Kubernetes-related code 113-4, a software-related code 113-5, a data migration-related code 113-7, and a test-related code 113-8.

The controller 112 may combine the collected codes in an order corresponding to a pipeline of the rehosting transformation operation.

The controller 112 may sequentially process an account process (S410), a network process (S420), ab infrastructure process (S430), a Kubernetes process (S440), a software process (S450), a data migration process (S460), and a test process (S470), using the received cloud configuration information and the collected codes, thereby executing the pipeline of the rehosting transformation operation.

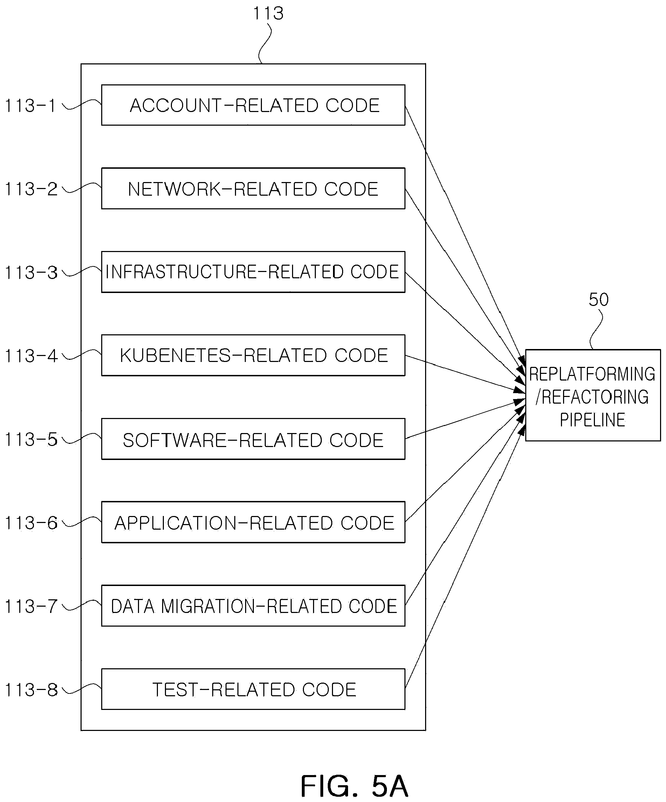

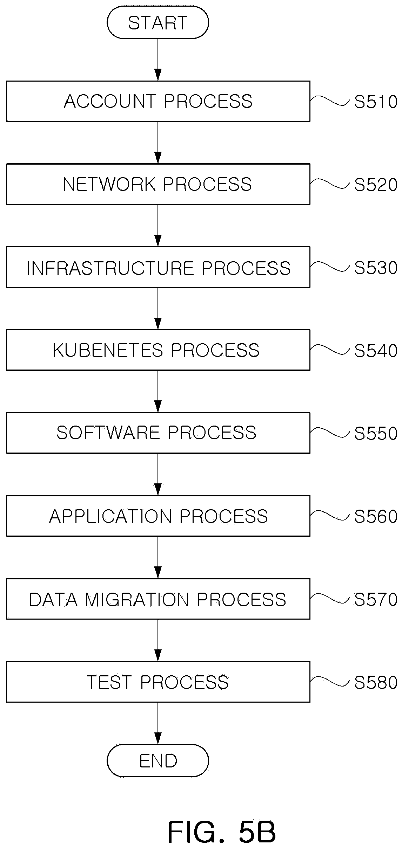

FIG. 5A and FIG. 5B are views illustrating a case in which a replatforming transformation operation or a refactoring transformation operation is performed in a method for automating cloud building according to an example embodiment of the present disclosure.

A controller 112 may determine an operation type based on the received cloud configuration information. When first type information is a cloud transformation operation, second type information is an initial configuration operation, and third type information is a replatforming transformation operation or a refactoring transformation operation, the controller 112 may extract and combine an account process 210, a network process 220, an infrastructure process 230, a Kubernetes process 240, a software process 250, an application process 260, a data migration process 270, and a test process 280 sequentially.

However, when the received cloud configuration information does not include Kubernetes-related information, the Kubernetes process 240 may not be extracted.

When the first type information is a cloud transformation operation, the second type information is an initial configuration operation, and the third type information is a replatforming transformation operation or a refactoring transformation operation, the controller 112 may collect an account-related code 113-1, a network-related code 113-2, an infrastructure-related code 113-3, a Kubernetes-related code 113-4, a software-related code 113-5, an application-related codes 113-6, a data migration-related code 113-7, and a test-related code 113-8.

The controller 112 may combine the collected codes in an order corresponding to a pipeline of the replatforming transformation operation or the refactoring transformation operation.

The controller 112 may sequentially process an accounting process (S510), a network process (S520), an infrastructure process (S530), a Kubernetes process (S540), a software process (S550), an application process (S560), a data migration process (S570), and a test process (S580) as illustrated in FIG. 5B, using the received cloud configuration information and the collected code, thereby executing the pipeline of the replatforming transformation operation or the refactoring transformation operation.

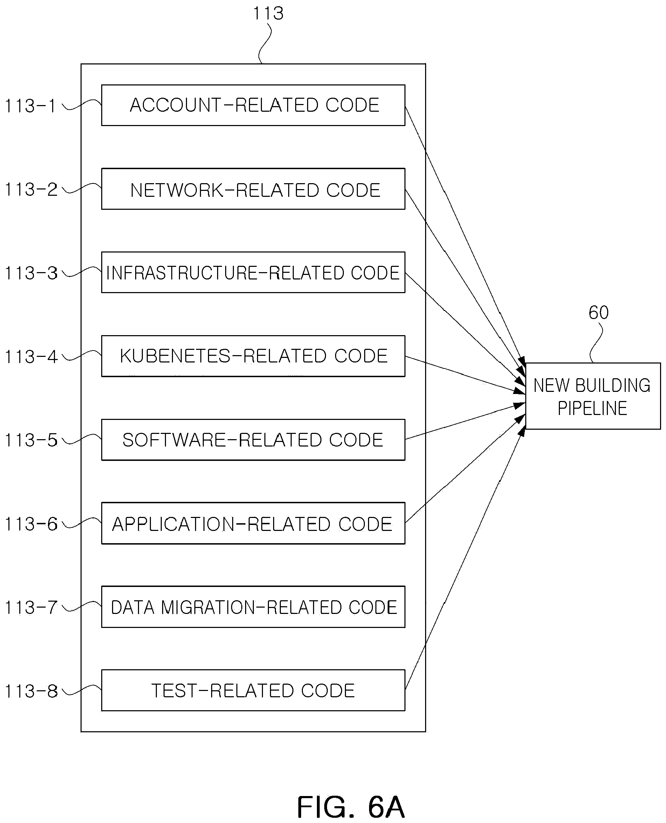

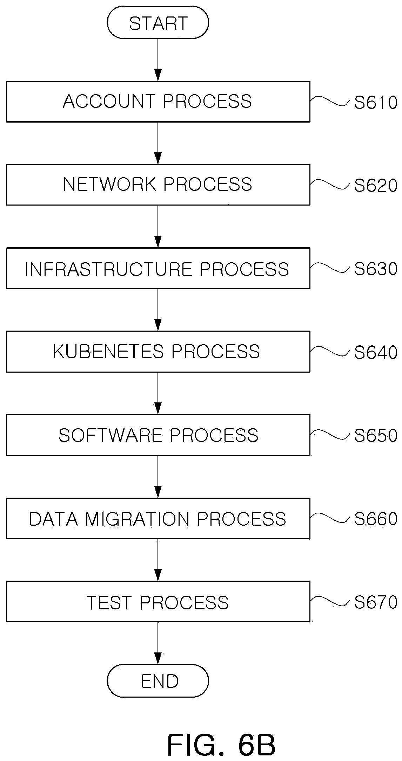

FIGS. 6A and 6B are views illustrating a case in which a new cloud building operation is performed in a method for automating cloud building according to an example embodiment of the present disclosure.

A controller 112 may determine an operation type based on the received cloud configuration information. When first type information is a new building operation and second type information is an initial configuration operation, the controller 112 may extract and combine an account process 210, a network process 220, an infrastructure process 230, a Kubernetes process 240, a software process 250, an application process 260, and a test process 280 sequentially.

However, when the received cloud configuration information does not include Kubernetes-related information, the Kubernetes process 240 may not be extracted.

When the first type information is a new building operation and the second type information is an initial configuration operation, the controller 112 may collect an account-related code 113-1, a network-related code 113-2, an infrastructure-related code 113-3, a Kubernetes-related code 113-4, a software-related code 113-5, an application-related code 113-6 and a test-related code 113-8.

The controller 112 may combine the collected codes in an order corresponding to a pipeline of the new building operation.

The controller 112 may sequentially a process accounting process (S610), a network process (S620), an infrastructure process (S630), a Kubernetes process (S640), a software process (S650), an application process (S660) and a test process (S670) as illustrated in FIG. 6B, using the received cloud configuration information and the collected codes, thereby executing the pipeline of the new building operation.

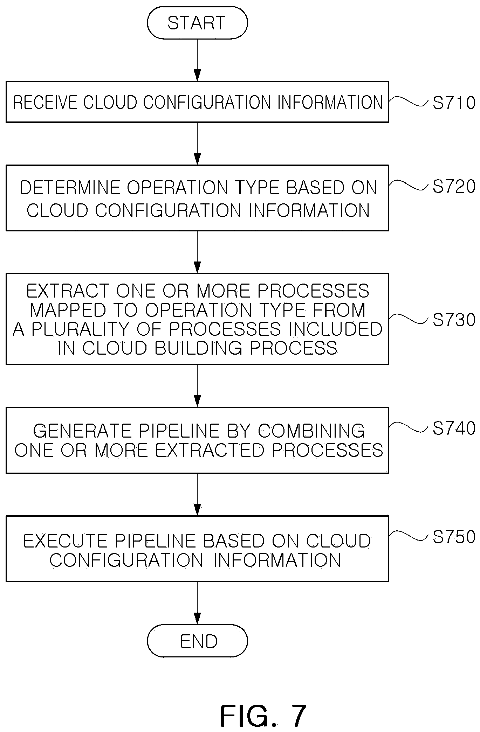

FIG. 7 is a flowchart of a method for automating cloud building according to an example embodiment of the present disclosure.

According to FIG. 7, a method for automating cloud building according to an example embodiment of the present disclosure may include receiving cloud configuration information (S710), determining an operation type based on the cloud configuration information (S720), extracting one or more processes mapped to an operation request from a plurality of processes included in a cloud building process (S730), generating a pipeline by combining the one or more extracted processes (S740), and executing the pipeline based on Cloud configuration information (S750).

A cloud building automation device 110 may determine whether the cloud configuration information received in operation S710 includes Kubernetes-related information. When the cloud configuration information includes the Kubernetes-related information, the cloud building automation device 110 may extract a Kubernetes process, and when the cloud configuration information does not include the Kubernetes-related information, the cloud building automation device 110 may generate and combine the pipelines without extracting the Kubernetes process.

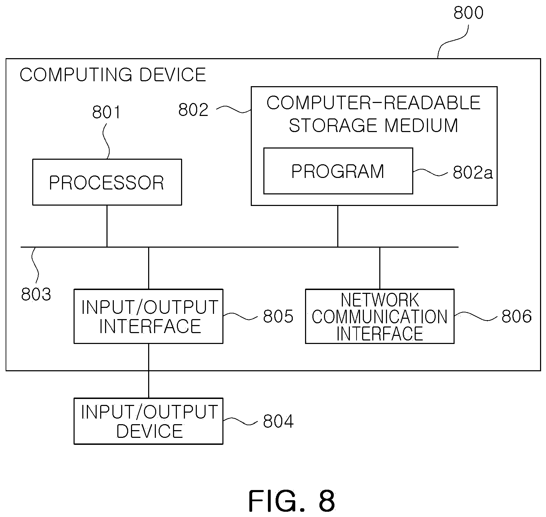

Meanwhile, FIG. 8 may be a block diagram of a computing device 800 that may fully or partially implement a cloud building automation device according to an example embodiment of the present disclosure, which may be a cloud building automation device 110 illustrated in FIG. 1.

As illustrated in FIG. 8, the computing device 800 includes at least one processor 801, a computer-readable storage medium 802, and a communication bus 803.

The processor 801 may enable the computing device 800 to operate according to the aforementioned example embodiment. For example, the processor 801 may execute one or more programs stored in the computer-readable storage medium 802. The one or more programs may include one or more computer executable instructions, and when the computer executable instructions are executed by the processor 801, the computing device 800 may be specified to perform operations according to an example embodiment.

The computer-readable storage medium 802 is specified to store computer-executable instructions or program codes, program data, and/or other suitable forms of information. A program 802a stored in the computer-readable storage medium 802 includes a set of instructions executable by the processor 801.

In an example embodiment, the computer-readable storage medium 802 may be a memory (a volatile memory such as a random access memory, a non-volatile memory, or an appropriate combination thereof), one or more magnetic disk storage devices, optical disk storage devices, flash memory devices, other types of storage media that can be accessed by the computing device 800 and can store desired information, or an appropriate combination thereof.

The communication bus 803 interconnects various other components of the computing device 800, including the processor 801 and the computer-readable storage medium 802.

The computing device 800 may also include one or more input/output interfaces 805 specified to provide an interface for one or more input/output devices 804, and one or more network communication interfaces 806. The input/output interface 805 and the network communication interface 806 are connected to the communication bus 803.

The input/output device 804 may be connected to other components of the computing device 800 through the input/output interface 805. An exemplary input/output device 804 may include a pointing device (such as a mouse or trackpad), a keyboard, a touch input device (such as a touchpad or a touch screen), a voice or sound input device, an output device such as various kinds of sensor devices and/or a capturing device, and/or an output device such as a display device, a printer, a speaker, and/or a network card. An exemplary input/output device 804 may be included inside the computing device 800 as a component constituting the computing device 800, or may be connected to the computing device 800 as a separate device distinguishable from the computing device 800.

Meanwhile, an example embodiment of the present disclosure may include a program for performing the methods described in this specification on a computer, and a computer-readable recording medium including the program. The computer-readable recording medium may include a program command, a local data file, and a local data structure alone or in combination. The medium may be those specially designed and specified for the present disclosure, or may be those commonly used in the field of computer software. Examples of computer-readable recording media include magnetic media such as hard disks, floppy disks, and magnetic tapes, optical recording media such as a CD-ROM and a DVD, and hardware devices specifically specified to store and perform program instructions, such as a ROM, a RAM and a flash memory. Examples of the program may include advanced language code that can be executed by a computer using an interpreter or the like, as well as machine language code such as that generated by a compiler.

While the representative example embodiments of the preset disclosure have been described above in detail, it may be understood by those skilled in the art that the example embodiments may be variously modified without departing from the scope of the present disclosure. Therefore, the scope of the present disclosure is defined not by the described embodiment but by the appended claims, and encompasses equivalents that fall within the scope of the appended claims.

## Claims

1. A method for automating cloud building, performed in a computing device comprising:
a processor; and
a storage medium in which one or more programs specified to be executed by the processor are recorded,
the method comprising:
receiving Cloud configuration information;
determining an operation type based on the received cloud configuration information;
extracting one or more processes mapped to the operation type from a plurality of processes in a cloud building process, and generating a pipeline by combining the one or more extracted processes; and
executing the pipeline based on the cloud configuration information.

2. The method for automating cloud building according to claim 1, wherein the plurality of processes include an account process, a network process, an infrastructure process, a Kubernetes process, a software process, an application process, a data migration process, and a test process, and
the plurality of processes are mapped to one or more operation types.

3. The method for automating cloud building according to claim 2, wherein the determining an operation type comprises:
based on the cloud configuration information, determining first type information as one of a cloud transformation operation or a cloud new building operation; and
based on the cloud configuration information, determining second type information as one of an initial configuration operation or a configuration change operation.

4. The method for automating cloud building according to claim 3, further comprising:
when the first type information is the cloud transformation operation, determining third type information as one of a rehosting transformation operation, a replatforming transformation operation, or a refactoring transformation operation based on the cloud configuration information.

5. The method for automating cloud building according to claim 4, wherein, when the first type information is the cloud transformation operation, the second type information is the initial configuration operation, and the third type information is the rehosting transformation operation,
in the generating a pipeline, the account process, the network process, the infrastructure process, the Kubernetes process, the software process, the data migration process, and the test process are sequentially combined.

6. The method for automating cloud building according to claim 4, wherein, when the first type information is the cloud transformation operation, the second type information is the initial configuration operation, and the third type information is the replatforming transformation operation or the refactoring transformation operation,
in the generating a pipeline, the account process, the network process, the infrastructure process, the Kubernetes process, the software process, the application process, the data migration process, and the test process are sequentially combined.

7. The method for automating cloud building according to claim 3, wherein, when the first type information is the new building operation and the second type information is the initial configuration operation,
in the generating a pipeline, the account process, the network process, the infrastructure process, the Kubernetes process, the software process, the application process, and the test process are sequentially combined.

8. The method for automating cloud building according to claim 3, further comprising:
storing the received cloud configuration information,
wherein, when the received cloud configuration information is changed configuration information for changing pre-stored configuration information, the second type information is determined as the configuration change operation.

9. The method for automating cloud building according to claim 8, wherein, when the second type information is the configuration change operation,
in the generating a pipeline, one or more processes related to the changed configuration information are extracted from the plurality of processes.

10. The method for automating cloud building according to claim 1, wherein the generating a pipeline comprises:
collecting codes for executing the one or more extracted processes; and
combining the codes so that the one or more extracted processes correspond to a combined order in the pipeline.

11. The method for automating cloud building according to claim 10, wherein the executing the pipeline comprises:
executing the one or more processes using the combined codes.

12. The method for automating cloud building according to claim 1, wherein the executing the pipeline comprises:
outputting a process result for a process included in the pipeline.
